# EUROPEAN PATENT APPLICATION

(11) **EP 4 467 336 A1**
(43) Date of publication of application: **27.11.2024**
(21) Application number: 22922217.9
(22) Date of filing: 27.12.2022
(51) Int. Cl.: B32B 27/00, B32B 27/30, B32B 27/40, C09J 7/38

(54) **SURFACE-PROTECTIVE FILM AND OPTICAL MEMBER WITH SURFACE-PROTECTIVE FILM**

(30) Priority: 19.01.2022 JP 2022006531
(71) Applicant: Nitto Denko Corporation, Ibaraki-shi, Osaka 567-8680 (JP)
(72) Inventor: TANAKA, Takuya, Ibaraki-shi, Osaka 567-8680 (JP); OGAWA, Keita, Ibaraki-shi, Osaka 567-8680 (JP)
(74) Representative: Hoffmann Eitle
(86) International application number: PCT/JP2022/048109
(87) International publication number: WO 2023/140067

(57) **Abstract**

Provided is a surface-protective film that allows an object to be protected to be accurately inspected even when the object to be protected is subjected to foreign matter inspection and air bubble inspection under a state in which the surface-protective film is bonded to the object to be protected. The surface-protective film according to an embodiment of the present invention includes a base material and an adhesion layer laminated on the base material. An absolute value of a maximum valley depth (Sv) of a surface of the adhesion layer on an opposite side to the base material is 500 nm or less. When the base material is subjected to microscopic observation, the number of defects each having a maximum Feret diameter of 10 pm or more is less than 3 in an observation region measuring 100 pm by 100 pm.

## Description

### Technical Field

The present invention relates to a surface-protective film and an optical member with a surface-protective film.

### Background Art

A surface-protective film may be bonded to the surface of an optical member (e.g., a display or an image pickup apparatus) or an electronic member in order to protect the surface. Examples of the surface-protective film include those which are temporarily bonded to various members during their production process and transportation process and are peeled before the various members are used (those which are used as process materials) and those which are used in a state of being bonded to the surfaces of various members (those which are intended for permanent adhesion) (see, for example, Patent Literature 1).

The surface-protective film used as a process material and the surface-protective film intended for permanent adhesion each include, on the main surface of a base material, an adhesion layer for bonding to the surface of an object to be protected (see, for example, Patent Literature 2).

It has been investigated that various members are inspected under a state in which such surface-protective films are bonded thereto. However, when the various members having the surface-protective films bonded thereto are subjected to foreign matter inspection for inspecting the presence or absence of foreign matters or air bubble inspection for inspecting the presence or absence of air bubbles, erroneous detection caused by the surface-protective films occurs, and the various members cannot be accurately inspected in some cases.

### Citation List

### Patent Literature

[PTL 1] JP 6899339 B2
[PTL 2] JP 2013-79360 A

### Summary of Invention

### Technical Problem

The present invention has been made to solve the problem of the related art described above, and has a primary object to provide a surface-protective film that allows an object to be protected to be accurately inspected even when the object to be protected is subjected to foreign matter inspection and air bubble inspection under a state in which the surface-protective film is bonded to the object to be protected.

### Solution to Problem

According to an embodiment of the present invention, there is provided a surface-protective film including a base material and an adhesion layer laminated on the base material. An absolute value of a maximum valley depth (Sv) of a surface of the adhesion layer on an opposite side to the base material is 500 nm or less, and when the base material is subjected to microscopic observation, the number of defects each having a maximum Feret diameter of 10 pm or more is less than 3 in an observation region measuring 100 pm by 100 µm.

In one embodiment, an absolute value of an arithmetic average height (Sa) of the surface of the adhesion layer on the opposite side to the base material is 25 nm or less.

In one embodiment, when the surface-protective film is subjected to microscopic observation, the number of defects each having a maximum Feret diameter of 10 pm or more is less than 3 in an observation region measuring 100 pm by 100 µm.

In one embodiment, when the surface-protective film is subjected to microscopic observation, the number of defects each having a maximum Feret diameter of less than 10 µm is 5 or less in an observation region measuring 100 µm by 100 µm.

In one embodiment, the base material has a tear strength of 1 N/mm or more.

In one embodiment, the adhesion layer contains at least one kind of pressure-sensitive adhesive selected from the group consisting of: a (meth)acrylic pressure-sensitive adhesive; a urethane-based pressure-sensitive adhesive; and a silicone-based pressure-sensitive adhesive.

According to another aspect of the present invention, there is provided an optical member with a surface-protective film including an optical member and the surface-protective film bonded to the optical member via the adhesion layer.

### Advantageous Effects of Invention

According to the embodiment of the present invention, the object to be protected (e.g., the optical member) can be accurately inspected even when the object to be protected is subjected to the foreign matter inspection and the air bubble inspection under a state in which the surface-protective film is bonded to the object to be protected.

### Brief Description of Drawings

FIG. **1** is a schematic sectional view of a surface-protective film according to one embodiment of the present invention.
FIG. **2** is a schematic sectional view of an optical member with a surface-protective film according to one embodiment of the present invention.

### Description of Embodiments

Typical embodiments of the present invention are described below. However, the present invention is not limited to these embodiments.

### A. Overall Configuration of Surface-protective Film

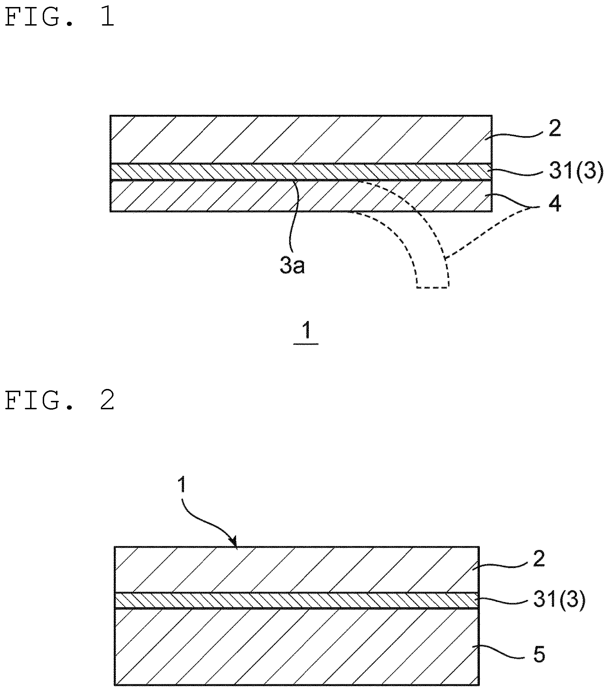

FIG. **1** is a schematic sectional view of a surface-protective film according to one embodiment of the present invention. A surface-protective film **1** of the illustrated example includes a base material **2** and an adhesion layer **3** laminated on the base material **2.**

The absolute value of the maximum valley depth (Sv) of a surface **3a** of the adhesion layer **3** on an opposite side to the base material **2** is 500 nm or less, preferably 300 nm or less, more preferably 250 nm or less, especially preferably 200 nm or less, particularly preferably 100 nm or less, most preferably 50 nm or less. The absolute value of the maximum valley depth (Sv) of the surface **3a** is typically 5 nm or more. The maximum valley depth (Sv) may be measured in conformity with JIS B0681-2:2018.

In addition, when the base material **2** is subjected to microscopic observation, the number of defects each having a maximum Feret diameter of 10 pm or more is preferably less than 3, more preferably 1 or less, still more preferably 0 in an observation region measuring 100 pm by 100 pm. The details of the microscopic observation are described in Examples described later.

In the case where the absolute value of the maximum valley depth (Sv) of the surface **3a** of the adhesion layer **3** is equal to or less than the above-mentioned upper limit, and the number of defects in the microscopic observation of the base material **2** is equal to or less than the above-mentioned upper limit, even when an object to be protected (e.g., an optical member) is subjected to foreign matter inspection and air bubble inspection under a state in which the surface-protective film is bonded to the object to be protected, erroneous detection caused by the surface-protective film (base material and adhesion layer) can be reduced, and the object to be protected can be accurately inspected.

In one embodiment of the present invention, the absolute value of the arithmetic average height (Sa) of the surface **3a** of the adhesion layer **3** on the opposite side to the base material **2** is preferably 25 nm or less, more preferably 10 nm or less, still more preferably 6 nm or less, especially preferably 5 nm or less. The absolute value of the arithmetic average height (Sa) of the surface **3a** is typically 0 nm or more. The arithmetic average height (Sa) may be measured in conformity with JIS B0681-2:2018.

When the absolute value of the arithmetic average height (Sa) of the surface **3a** of the adhesion layer **3** is equal to or less than the above-mentioned upper limit, erroneous detection caused by the surface-protective film can be stably reduced in the air bubble inspection.

In one embodiment of the present invention, the tear strength of the base material **2** is, for example, 0.5 N/mm or more, preferably 1 N/mm or more, more preferably 2 N/mm or more. When the tear strength of the base material is equal to or more than the above-mentioned lower limit, erroneous detection caused by the surface-protective film can be further reduced in the foreign matter inspection. The tear strength of the base material is typically 200 N/mm or less. The tear strength of the base material may be measured in conformity with JIS K7128-1: 1998.

In one embodiment of the present invention, the surface-protective film **1** further includes a release liner **4.** The release liner **4** is located on the adhesion layer **3** on the opposite side to the base material **2** and is bonded to the surface **3a** of the adhesion layer **3.**

Constituent elements of the surface-protective film are described below.

### B. Base Material

The base material 2 is formed of any appropriate resin film that may be used as a surface-protective film. Specific examples of a material serving as the main component of the resin film include transparent resins including cycloolefin (COP)-based resins such as a polynorbornene-based resin, polyester-based resins such as polyethylene terephthalate (PET)-based resin, cellulose-based resins such as triacetyl cellulose (TAC), and polycarbonate (PC)-based, (meth)acrylic, polyvinyl alcohol-based, polyamide-based, polyimide-based, polyether sulfone-based, polysulfone-based, polystyrene-based, polyolefin-based, and acetate-based resins. The examples also include thermosetting resins or UV-curable resins, such as (meth)acrylic, urethane-based, (meth)acrylic urethane-based, epoxy-based, and silicone-based resins. The term "(meth)acrylic resin" refers to an acrylic resin and/or a methacrylic resin. The examples also include glassy polymers such as a siloxane-based polymer. In addition, a polymer film described in JP 2001-343529 A (WO 01/37007 A1) may be used. For example, a resin composition containing a thermoplastic resin having a substituted or unsubstituted imide group in a side chain thereof, and a thermoplastic resin having a substituted or unsubstituted phenyl group and a nitrile group in side chains thereof may be used as a material for the film, and the resin composition is, for example, a resin composition containing an alternating copolymer formed of isobutene and N-methylmaleimide and an acrylonitrile-styrene copolymer. The polymer film may be, for example, an extrudate of the above-mentioned resin composition. Materials for the resin film may be used alone or in combination thereof.

The base material **2** preferably contains at least one kind of transparent resin selected from the group consisting of COP-based, PET-based, TAC-based, PC-based, and (meth)acrylic resins, more preferably contains at least one kind of transparent resin selected from the group consisting of COP-based, PET-based, PC-based, and (meth)acrylic resins, still more preferably contains at least one kind of transparent resin selected from the group consisting of COP-based, PET-based, and PC-based resins, and especially preferably contains a COP-based resin. When the base material contains the above-mentioned transparent resin, erroneous detection caused by the surface-protective film can be more stably reduced in the foreign matter inspection and the air bubble inspection. In addition, when the base material contains any one of the following transparent resins: the COP-based, PET-based, PC-based, and (meth)acrylic resins, erroneous detection caused by the surface-protective film in the foreign matter inspection can be reduced as compared to the case in which the base material contains the TAC-based resin. In particular, when the base material contains any one of the following transparent resins: the COP-based, PET-based, and PC-based resins, erroneous detection caused by the surface-protective film can be more stably reduced in the foreign matter inspection.

The base material **2** may contain, for example, an antioxidant, a UV absorber, a light stabilizer, a nucleating agent, a filler, a pigment, a surfactant, or an antistatic agent. For example, an easy-adhesion layer, an easy-lubricating layer, an antiblocking layer, an antistatic layer, an antireflection layer, or an oligomer blocking layer may be arranged on the surface (surface on the opposite side to the adhesion layer **3**) of the base material **2.**

The thickness of the base material **2** is typically 5 um or more, preferably 20 um or more, and is typically 200 um or less, preferably 100 um or less.

### C. Adhesion Layer

The adhesion layer **3** is arranged on the surface of the base material **2** in order to bond the surface-protective film **1** to the object to be protected. The adhesion layer **3** may be a pressure-sensitive adhesive layer formed of a pressure-sensitive adhesive or an adhesive layer formed of an adhesive. In the illustrated example, the adhesion layer **3** is a pressure-sensitive adhesive layer **31.**

When the adhesion layer is a pressure-sensitive adhesive layer, the adhesion layer (pressure-sensitive adhesive layer) typically contains at least one kind of pressure-sensitive adhesive selected from the group consisting of: a (meth)acrylic pressure-sensitive adhesive; a urethane-based pressure-sensitive adhesive; and a silicone-based pressure-sensitive adhesive.

When the adhesion layer is an adhesive layer, the adhesive layer contains an adhesive that is not completely cured before the surface-protective film is bonded to the object to be protected, and the adhesive is completely cured after the surface-protective film is bonded to the object to be protected. The adhesion layer (adhesive layer) typically contains at least one kind of adhesive selected from the group consisting of: a (meth)acrylic adhesive; a urethane-based adhesive; and a silicone-based adhesive.

Of such pressure-sensitive adhesives and adhesives, a (meth)acrylic pressure-sensitive adhesive is a preferred example.

The (meth)acrylic pressure-sensitive adhesive contains a polymer of a monomer component containing an alkyl (meth)acrylate as a main component (hereinafter referred to as "(meth)acrylic polymer"). In other words, the (meth)acrylic polymer contains a structural unit derived from an alkyl (meth)acrylate. The content ratio of the structural unit derived from an alkyl (meth)acrylate in the (meth)acrylic polymer is typically 50 wt% or more, preferably 80 wt% or more, more preferably 93 wt% or more, and is, for example, 100 wt% or less, preferably 98 wt% or less.

The alkyl group of the alkyl (meth)acrylate may be linear or branched. The alkyl group has, for example, 1 or more and 18 or less carbon atoms. Examples of the alkyl group include a methyl group, an ethyl group, a butyl group, a 2-ethylhexyl group, a decyl group, an isodecyl group, and an octadecyl group. The alkyl (meth) acrylates may be used alone or in combination thereof. The average number of carbon atoms of the alkyl group is preferably from 3 to 10.

The (meth)acrylic polymer may contain, in addition to the structural unit derived from an alkyl (meth)acrylate, a structural unit derived from a copolymerizable monomer that is polymerizable with the alkyl (meth)acrylate. Examples of the copolymerizable monomer include a carboxyl group-containing monomer and a hydroxyl group-containing monomer. The copolymerizable monomers may be used alone or in combination thereof.

The carboxyl group-containing monomer is a compound containing a carboxyl group in a structure thereof and containing a polymerizable unsaturated double bond, such as a (meth)acryloyl group or a vinyl group. Examples of the carboxyl group-containing monomer include (meth)acrylic acid, carboxyethyl (meth)acrylate, maleic acid, fumaric acid, and crotonic acid, and a preferred example thereof is (meth)acrylic acid. When the (meth)acrylic polymer contains a structural unit derived from the carboxyl group-containing monomer, the pressure-sensitive adhesive characteristics of the pressure-sensitive adhesive layer can be improved. When the (meth)acrylic polymer contains a structural unit derived from the carboxyl-group containing monomer, the content ratio of the structural unit derived from the carboxyl-group containing monomer is preferably 0.01 wt% or more and 10 wt% or less.

The hydroxyl group-containing monomer is a compound containing a hydroxyl group in a structure thereof and containing a polymerizable unsaturated double bond, such as a (meth)acryloyl group or a vinyl group. Examples of the hydroxyl group-containing monomer include 2-hydroxyethyl (meth)acrylate, 3-hydroxypropyl (meth)acrylate, 8-hydroxyoctyl (meth)acrylate, 12-hydroxylauryl (meth)acrylate, and (4-hydroxymethylcyclohexyl)-methyl acrylate, preferred examples thereof include 2-hydroxyethyl (meth)acrylate and 4-hydroxybutyl (meth)acrylate, and a more preferred example thereof is 2-hydroxyethyl (meth)acrylate. When the (meth)acrylic polymer includes a structural unit derived from the hydroxyl group-containing monomer, the durability of the pressure-sensitive adhesive layer can be improved. When the (meth)acrylic polymer contains a structural unit derived from the hydroxyl group-containing monomer, the content ratio of the structural unit derived from the hydroxyl group-containing monomer in the (meth)acrylic polymer is preferably 0.01 wt% or more and 10 wt% or less.

The weight-average molecular weight Mw of the (meth)acrylic polymer is, for example, from 100,000 to 2,000,000, preferably from 200,000 to 1,000,000.

In addition, the (meth)acrylic pressure-sensitive adhesive may contain a cross-linking agent. Typical examples of the cross-linking agent include an organic cross-linking agent and a polyfunctional metal chelate, and a preferred example thereof is an organic cross-linking agent. Examples of the organic cross-linking agent include an isocyanate-based cross-linking agent, a peroxide-based cross-linking agent, an epoxy-based cross-linking agent, and an imine-based cross-linking agent, and a preferred example thereof is an isocyanate-based cross-linking agent. When the pressure-sensitive adhesive contains a cross-linking agent, the content ratio of the cross-linking agent is typically 0.01 part by weight or more and 15 parts by weight or less with respect to 100 parts by weight of the (meth)acrylic polymer.

Further, the (meth)acrylic pressure-sensitive adhesive may contain various additives (e.g., a polymerization initiator, a solvent, and a cross-linking catalyst) at any appropriate ratios.

Such pressure-sensitive adhesive compositions ((meth)acrylic pressure-sensitive adhesive, urethane-based pressure-sensitive adhesive, and silicone-based pressure-sensitive adhesive) each contain a base polymer (or its constituent monomer component), and a cross-linking agent and a solvent as required. The pressure-sensitive adhesive composition may contain an additive, such as a polymerization catalyst, a cross-linking catalyst, a silane coupling agent, a tackifier, a plasticizer, a softening agent, a deterioration-preventing agent, a filler, a colorant, a UV absorber, an antioxidant, a surfactant, or an antistatic agent, to the extent that the characteristics of the present invention are not impaired.

The thickness of the adhesion layer **3** is typically 1 um or more, preferably 5 um or more, and is typically 30 um or less, preferably 15 um or less.

Such adhesion layer **3** may be formed on the surface of the base material by direct transfer or may be formed thereon by transfer. In the case of the direct transfer, a pressure-sensitive adhesive composition or an adhesive composition is directly applied to the surface of the base material **2** to form the adhesion layer **3.** In the case of the transfer, a pressure-sensitive adhesive composition or an adhesive composition is applied to the surface of the release liner **4** to form the adhesion layer **3,** and then the base material is bonded to the adhesion layer **3.** In particular, when the base material **2** contains an amorphous resin having a relatively low glass transition temperature Tg (e.g., 150°C or less), the adhesion layer **3** is preferably formed by a transfer process. With the transfer process, the influence of the high temperature during drying required for forming the adhesion layer on the base material can be suppressed.

### D. Release Liner

The release liner **4** is typically temporarily bonded to the adhesion layer **3** until the surface-protective film is bonded to the object to be protected, and is peeled from the adhesion layer **3** when the surface-protective film is bonded.

The release liner **4** is formed of any appropriate resin film that may be used as a release liner. Specific examples of a material serving as the main component of the resin film include polyethylene terephthalate (PET), polyethylene, and polypropylene. Materials for the resin film may be used alone or in combination thereof. The release liner **4** may or may not be transparent.

A release treatment layer may be arranged on the contact surface of the release liner **4** with respect to the surface **3a** of the adhesion layer **3.** Examples of a release treatment agent for forming the release treatment layer include a silicone-based release treatment agent, a fluorine-based release treatment agent, and a long-chain alkyl acrylate-based release agent, a preferred example thereof is a silicone-based release treatment agent, and a more preferred example thereof is a vinyl group-containing addition-type silicone. The release treatment agents may be used alone or in combination thereof. The thickness of the release treatment layer is typically 50 nm or more and 400 nm or less.

The contact surface of the release liner **4** with respect to the surface **3a** of the adhesion layer **3** is smooth. Specifically, the absolute value of the maximum peak height (Sp) of the contact surface of the release liner **4** with respect to the adhesion layer **3** is typically 500 nm or less, preferably 400 nm or less, more preferably 300 nm or less, still more preferably 100 nm or less. When the absolute value of the maximum peak height (Sp) of the contact surface is equal to or less than the above-mentioned upper limit, the maximum valley depth (Sv) of the surface of the adhesion layer on the opposite side to the base material can be stably adjusted to be equal to or less than the above-mentioned upper limit. The absolute value of the maximum peak height (Sp) of the contact surface is typically 10 nm or more. The maximum peak height (Sp) may be measured in conformity with JIS B0681-2:2018.

The absolute value of the arithmetic average height (Sa) of the contact surface of the release liner **4** with respect to the surface **3a** of the adhesion layer **3** is typically 30 nm or less, preferably 20 nm or less, more preferably 10 nm or less, still more preferably 5 nm or less. The absolute value of the arithmetic average height (Sa) of the contact surface is typically 0 nm or more.

The thickness of the release liner **4** is typically 5 pm or more, preferably 20 pm or more, and is typically 60 pm or less, preferably 45 µm or less. When the release treatment layer is formed, the thickness of the release liner is the thickness including the thickness of the release treatment layer.

### E. Optical Member with Surface-protective Film

The surface-protective film described in the sections A to D may be applied to the surface protection of various objects to be protected. More specifically, the surface-protective film is bonded to the object to be protected via the adhesion layer after the release liner is peeled from the adhesion layer.

In one embodiment of the present invention, when the surface-protective film (in a state in which the release liner is removed by peeling) is subjected to microscopic observation, the number of defects each having a maximum Feret diameter of 10 um or more is preferably less than 3, more preferably 1 or less, still more preferably 0 in an observation region measuring 100 um by 100 um.

When the number of defects of 10 um or more in the microscopic observation of the surface-protective film is equal to or less than the above-mentioned upper limit, erroneous detection caused by the surface-protective film can be more stably reduced in the foreign matter inspection.

When the surface-protective film (in a state in which the release liner is removed by peeling) is subjected to microscopic observation, the number of defects each having a maximum Feret diameter of less than 10 um is, for example, 10 or less, preferably 5 or less, more preferably 3 or less, still more preferably 1 or less in an observation region measuring 100 um by 100 um.

Even when defects are observed in the microscopic observation of the surface-protective film, as long as the maximum Feret diameter is less than 10 µm and the number of defects is equal to or less than the above-mentioned upper limit, erroneous detection of the defects in the foreign matter inspection can be suppressed.

When the adhesion layer is a pressure-sensitive adhesive layer, the adhesive strength of the surface-protective film (in a state in which the release liner is removed by peeling) with respect to an acrylic plate is, for example, 0.03 N/25 mm or more, preferably 0.05 N/25 mm or more, more preferably 0.07 N/25 mm or more, typically 15 N/25 mm or less. The adhesive strength with respect to the acrylic plate is a peel strength when the surface-protective film is bonded to the acrylic plate, left to stand still under an environment of 23°C for 30 minutes, and subjected to a 180° peeling test at a tension speed of 300 mm/min.

The haze of the surface-protective film (in a state in which the release liner is removed by peeling) is, for example, 2% or less, preferably 1.5% or less, more preferably 0.4% or less, and is typically 0.05% or more.

Examples of the object to be protected include an optical member and an electronic member, and a preferred example thereof is an optical member. FIG. **2** is a schematic sectional view of an optical member with a surface-protective film according to one embodiment of the present invention. The optical member with a surface-protective film of the illustrated example includes an optical member **5** and the surface-protective film **1** bonded to the optical member **5** via the adhesion layer **3.** The surface-protective film **1** illustrated in FIG. **2** includes the base material **2** and the adhesion layer **3** without including the release liner **4.**

Typical examples of the optical member include an optical laminate including a polarizing plate and/or a retardation layer, a display, an image pickup apparatus, a lens, and a (half)mirror.

### Examples

The present invention is specifically described below by way of Examples. However, the present invention is not limited to these Examples. Measurement methods for characteristics are as described below.

### (1) Measurement of Maximum Valley Depth and Arithmetic Average Height of Surface of Adhesion Layer

In a surface-protective film obtained in each of Examples and Comparative Examples, a release liner was peeled from an adhesion layer (pressure-sensitive adhesive layer) so that the surface of the adhesion layer on an opposite side to a base material was exposed. Then, the surface-protective film, from which the release liner had been removed, was set in a white light interferometer (manufactured by Zygo Corporation, product name: Zygo NewView 7300) so that the exposed surface of the adhesion layer and an objective lens faced each other, and interference data on the surface of the adhesion layer was measured under the following conditions to provide a two-dimensional image.

Measurement conditions of white light interferometer:
Objective lens; ×10
Inner lens; ×1.0
Resolution; 1.09 um
Measurement field area: 0.3641 mm²
Removed; Cylinder

In the resultant two-dimensional image, the minimum value for an average surface within the measurement field area was defined as the maximum valley depth (Sv). In addition, the value of Ra was defined as the arithmetic average height (Sa). A value obtained by averaging data on three randomly selected points was adopted as each of the maximum valley depth and the arithmetic average height.

The results are shown in Table 2.

### (2) Measurement of Maximum Peak Height and Arithmetic Average Height of Release Liner

In the section (1), the release liner peeled from the adhesion layer (pressure-sensitive adhesive layer) was set in the above-mentioned white light interferometer, and interference data on the release liner was measured under the above-mentioned conditions to provide a two-dimensional image. In the resultant two-dimensional image, the maximum value for an average surface within the measurement field area was defined as the maximum peak height (Sp). In addition, the value of Ra was defined as the arithmetic average height (Sa). A value obtained by averaging data on three randomly selected points was adopted as each of the maximum peak height and the arithmetic average height.

The results are shown in Table 1.

### (3) Measurement of Number of Defects of Base Material by Microscopic Observation

The surface of the base material described in each of Examples and Comparative Examples was observed with a microscope (manufactured by Olympus Corporation, product name: BX51, eyepiece lens magnification: 10×, objective lens magnification: 10×). Then, a region measuring 0.1 mm by 0.1 mm was randomly selected from an observation field, and the number of defects each having a maximum Feret diameter of 10 um or more was visually measured.

The results are shown in Tables 1 and 2.

### (4) Measurement of Tear Strength of Base Material

Measurement was basically performed in conformity with JIS K7128-1:1998.

The base material described in each of Examples and Comparative Examples was cut into a size measuring 150 mm by 50 mm. Then, a slit of 75 mm was formed from the center of an end portion on a short side in a direction parallel to a long side. Thus, a sample piece was prepared. The sample was prepared so that the long side direction was parallel to an MD direction regarding a tear strength in the MD direction and the long side direction was parallel to a TD direction regarding a tear strength in the TD direction.

The resultant test piece was attached to a tensile tester, and was evaluated at a tension speed of 200 mm/min (under an atmosphere at a temperature of 23°C and a relative humidity of 50%). Thus, a tear force was measured. A tear strength "f" was calculated from the resultant tear force. (f=Ft/d (Ft: tear force [N] of the test piece, "d": thickness [mm] of the test piece))

The results are shown in Table 1.

### (5) Measurement of Number of Defects of Surface-protective Film by Microscopic Observation

In the surface-protective film obtained in each of Examples and Comparison Examples, the release liner was peeled from the adhesion layer (pressure-sensitive adhesive layer) so that the surface of the adhesion layer on the opposite side to the base material was exposed. Then, observation was performed with a microscope (manufactured by Olympus Corporation, product name: BX51, eyepiece lens magnification: 10×, objective lens magnification: 10×) so that the exposed surface of the adhesion layer and the objective lens faced each other. Then, a region measuring 0.1 mm by 0.1 mm was randomly selected from an observation field, and the number of defects each having a maximum Feret diameter of 10 um or more was visually measured.

The results are shown in Table 2.

### (6) Haze of Surface-protective Film

In the surface-protective film obtained in each of Examples and Comparative Examples, the release liner was peeled from the adhesion layer (pressure-sensitive adhesive layer), and a haze was measured by irradiating the surface-protective film with light from the base material side through use of a haze meter ("NDH-5000" manufactured by Nippon Denshoku Industries Co., Ltd.) in conformity with JIS K7136. The results are shown in Table 2.

### (7) Measurement of Peel Strength of Surface-protective Film

The surface-protective film obtained in each of Examples and Comparative Examples was cut into a size measuring 25 mm in width and 100 mm in length, and the release liner was peeled from the adhesion layer (pressure-sensitive adhesive layer). The surface-protective film was subjected to pressure bonding with rolls to an acrylic plate ("Acrylite" manufactured by Mitsubishi Chemical Corporation, thickness: 2 mm, width: 70 mm, length: 100 mm) at a pressure of 0.25 MPa and a feed speed of 0.3 m/min. After this sample was left to stand still under an environment at a temperature of 23°C and a relative humidity of 50% for 30 minutes, a peeling test was performed under the same environment at a peel angle of 180° and a tension speed of 300 mm/min to measure a 180° peel strength. The evaluation results are shown in Table 2.

### (8) Number of Foreign Matters in Automatic Inspection

The number of foreign matters in a region measuring 30 mm by 30 mm was counted based on the method described in JP 2021-135219 A. In this case, size classification was also performed for those corresponding to a size of from 10 um to 29 um and those corresponding to a size of from 30 um to 100 um. The results are shown in Table 2.

### (9) Number of Air Bubbles in Automatic Inspection

The number of air bubbles in a region measuring 30 mm by 30 mm was counted based on the method described in JP 2021-135219 A. A detection size was set to a size of from 10 um to 100 um. The results are shown in Table 2.

### <Production of PC-based Resin Film>

With respect to 81.98 parts by weight of isosorbide (hereinafter sometimes abbreviated as "ISB"), 47.19 parts by weight of tricyclodecanedimethanol (hereinafter sometimes abbreviated as "TCDDM"), 175.1 parts by weight of diphenyl carbonate (hereinafter sometimes abbreviated as "DPC"), and 0.979 part by weight of a 0.2 wt% aqueous solution of cesium carbonate serving as a catalyst were loaded into a reaction vessel. Under a nitrogen atmosphere, as the first step of a reaction, a heating bath was heated to a temperature of 150°C, and the raw materials were dissolved while being stirred as required (about 15 minutes). Then, a pressure in the reaction vessel was changed from normal pressure to 13.3 kPa, and generated phenol was discharged out of the reaction vessel while the heating bath temperature was raised to 190°C in 1 hour. The entire reaction vessel was held at 190°C for 15 minutes. After that, as the second step of the reaction, the pressure in the reaction vessel was set to 6.67 kPa, and generated phenol was discharged out of the reaction vessel while the heating bath temperature was raised to 230°C in 15 minutes. The stirring torque of a stirrer was increased, and hence the temperature was raised to 250°C in 8 minutes. Further, in order to remove generated phenol, the pressure in the reaction vessel was allowed to reach 0.200 kPa or less. After the stirring torque reached a predetermined torque, the reaction was finished, and the reaction product was extruded into water to provide a pellet of a polycarbonate resin. The birefringence Δnxy of the resultant polycarbonate resin was 0.015. After the resultant polycarbonate resin was dried in a vacuum at 100°C for 12 hours, a polycarbonate resin film having a thickness of 90 um was produced with a film-forming apparatus including a single-screw extruder (manufactured by Toshiba Machine Co., Ltd., cylinder set temperature: 250°C), a T-die (width: 1,700 mm, set temperature: 250°C), a cast roll (set temperature: 60°C), and a winding machine.

### <Polymerization of Acrylic Polymer A>

96.2 Parts by weight of 2-ethylhexyl acrylate (2EHA) and 3.8 parts by weight of hydroxyethyl acrylate (HEA) serving as monomer components, and 0.2 part by weight of 2,2'-azobisisobutyronitrile (AIBN) serving as a polymerization initiator were loaded into a reaction vessel including a temperature gauge, a stirrer, a condenser, and a nitrogen gas inlet tube together with 150 parts by weight of ethyl acetate. While the mixture was gently stirred at 23°C, nitrogen purging was performed by introducing a nitrogen gas. After that, a polymerization reaction was performed for 6 hours while the liquid temperature was kept at around 65°C. Thus, a solution of an acrylic polymer A (concentration: 40 wt%) was prepared. The weight-average molecular weight of the acrylic polymer A was 540,000.

### <Preparation of Pressure-sensitive Adhesive Composition A>

Ethyl acetate was added to the solution of the acrylic polymer A to dilute the solution to a concentration of 20 wt%. With respect to 500 parts by weight (solid content: 100 parts by weight) of this solution, 4 parts by weight of an isocyanurate form of hexamethylene diisocyanate ("CORONATE HX" manufactured by Tosoh Corporation) serving as a cross-linking agent and 3 parts by weight of dibutyltin dilaurate (1 wt% ethyl acetate solution) (solid content: 0.03 part by weight) serving as a cross-linking catalyst were added, followed by stirring, to prepare a pressure-sensitive adhesive composition A.

### <Polymerization of Acrylic Polymer B>

95 Parts by weight of butyl acrylate and 5 parts by weight of acrylic acid serving as monomer components, and 0.2 part by weight of AIBN serving as a polymerization initiator were loaded into a reaction vessel including a temperature gauge, a stirrer, a condenser, and a nitrogen gas inlet tube together with 186 parts by weight of ethyl acetate. While the mixture was gently stirred at 23°C, nitrogen purging was performed by introducing a nitrogen gas. After that, a polymerization reaction was performed for 10 hours while the liquid temperature was kept at around 63°C. Thus, a solution of an acrylic polymer B (concentration: 35 wt%) was prepared. The weight-average molecular weight of the acrylic polymer B was 500,000.

### <Preparation of Pressure-sensitive Adhesive Composition B>

Ethyl acetate was added to the solution of the acrylic polymer B to dilute the solution to a concentration of 20 wt%. With respect to 500 parts by weight (solid content: 100 parts by weight) of this solution, 0.075 part by weight of a tetrafunctional epoxy-based compound ("TETRAD-C" manufactured by Mitsubishi Chemical Corporation) serving as a cross-linking agent was added, followed by stirring, to prepare a pressure-sensitive adhesive composition B.

### <Preparation of Application Liquid A>

100 Parts by weight of a vinyl group-containing addition-type silicone ("KS-847T" manufactured by Shin-Etsu Chemical Co., Ltd., 30% toluene solution), 3 parts by weight of a platinum catalyst ("CAT-PL-50T" manufactured by Shin-Etsu Chemical Co., Ltd.), 15,000 parts by weight of toluene serving as a diluent solvent, and 1,500 parts by weight of normal hexane were mixed to prepare an application liquid A (see JP 2015-151473 A) .

### <Production of Release Liner A>

The application liquid A was applied to one surface of a polyethylene terephthalate (PET) film (manufactured by Toray Industries, Inc., product number: 38U48) having a thickness of 38 um through use of a Mayer bar, and then heated in a hot air dryer at 130°C for 1 minute to provide a release liner A. The application amount of the application liquid A was 0.1 g/m² in terms of solid content.

### <Production of Release Liner B>

A release liner B was produced by the same method as that of the release liner A except that the application amount of the application liquid A was set to 0.3 g/m² in terms of solid content.

### <Production of Release Liner C>

A release liner C was produced by the same method as that of the release liner A except that the PET film to which the application liquid A was applied was changed to T100C38 (manufactured by Mitsubishi Chemical Corporation, thickness: 38 um). The application surface of the application liquid A was set to the corona-treated surface of the PET film.

### [Example 1]

The pressure-sensitive adhesive composition A was applied to the surface of a base material (COP-based resin film manufactured by Zeon Corporation, product number: ZF16) and then dried to form a pressure-sensitive adhesive layer. The thicknesses of the base material and the pressure-sensitive adhesive layer are shown in Table 1.

Then, a release liner (manufactured by Toyobo Co., Ltd., product number: TG704) was bonded to the surface of the pressure-sensitive adhesive layer on the opposite side to the base material. The thickness of the release liner is shown in Table 1.

As described above, a surface-protective film was obtained.

### [Example 2]

The pressure-sensitive adhesive composition A was applied to the surface of a release liner (manufactured by Toyobo Co., Ltd., product number: TG704) and then dried to form a pressure-sensitive adhesive layer. A base material (COP-based resin film manufactured by Zeon Corporation, product number: ZF16) was bonded to the resultant pressure-sensitive adhesive layer. The thicknesses of the base material, the pressure-sensitive adhesive layer, and the release liner are shown in Table 1.

As described above, a surface-protective film was obtained.

### [Example 3]

A surface-protective film was obtained in the same manner as in Example 2 except that the base material was changed to the above-mentioned PC-based resin film.

### [Example 4]

A surface-protective film was obtained in the same manner as in Example 1 except that the base material was changed to a particle-free PET film (manufactured by Toray Industries, Inc., product number: 50U48).

### [Example 5]

A surface-protective film was obtained in the same manner as in Example 1 except that the base material was changed to a high-retardation PET film (manufactured by Toyobo Co., Ltd., product number: TA053).

### [Example 6]

A surface-protective film was obtained in the same manner as in Example 2 except that the release liner (product number: TG704) was changed to the above-mentioned release liner A.

### [Example 7]

A surface-protective film was obtained in the same manner as in Example 2 except that the release liner (product number: TG704) was changed to the above-mentioned release liner B.

### [Example 8]

A surface-protective film was obtained in the same manner as in Example 2 except that the pressure-sensitive adhesive composition A was changed to the pressure-sensitive adhesive composition B.

### [Example 9]

A surface-protective film was obtained in the same manner as in Example 2 except that the base material was changed to a TAC-based resin film (manufactured by FUJIFILM Corporation, product number: TG60UL).

### [Example 10]

A surface-protective film was obtained in the same manner as in Example 2 except that the base material was changed to a (meth)acrylic resin film (manufactured by Toyo Kotetsu Co., Ltd., product number: HTX40).

### [Comparative Example 1]

A surface-protective film was obtained in the same manner as in Example 1 except that the base material was changed to a PET film (manufactured by Mitsubishi Chemical Corporation, product number: T100C38). The application surface of the pressure-sensitive adhesive layer was set to the corona-treated surface of the PET film.

### [Comparative Example 2]

A surface-protective film was obtained in the same manner as in Example 2 except that the release liner was changed to the above-mentioned release liner C.

### [Comparative Example 3]

A surface-protective film was obtained in the same manner as in Comparative Example 2 except that the pressure-sensitive adhesive composition A was changed to the pressure-sensitive adhesive composition B.

**Table 1**

| Example/Com parative Example | Base material | | | | | Press-sensitive adhesive | | | Release liner | | | | | |
|---|---|---|---|---|---|---|---|---|---|---|---|---|---|---|
| | Kind | Thic knes s [µm] | Number of defects in microscopy [piece(s)/0 .01 mm²] | Tear strength [N/mm] | | Kind | Thick ness [µm] | Applicati on process | Applica tion liquid | Kind | Applicati on amount (solid content) [g/m²] | Thick ness [µm] | Sp [nm] (absol ute value) | Sa [nm] (absol ute value) |
| | | | 10 µm or more* | MD | TD | | | | | | | | | |
| Example 1 | COP | 50 | 0 | 2.1 | 2.1 | Pressure-sensitive adhesive composition A | 10 | Direct transfer | - | TG704 | - | 31 | 44.4 | 3.2 |
| Example 2 | COP | 50 | 0 | 2.1 | 2.1 | Pressure-sensitive adhesive composition A | 10 | Transfer | - | TG704 | - | 31 | 44.4 | 3.2 |
| Example 3 | PC | 90 | 0 | 3.9 | 4.0 | Pressure-sensitive adhesive composition A | 10 | Transfer | - | TG704 | - | 31 | 44.4 | 3.2 |
| Example 4 | Particle-free PET | 50 | 1 | 7.9 | 4.0 | Pressure-sensitive adhesive composition A | 10 | Direct transfer | - | TG704 | - | 31 | 44.4 | 3.2 |
| Example 5 | High-retardati on PET | 80 | 0 | ≥189 | 8.2 | Pressure-sensitive adhesive composition A | 10 | Direct transfer | - | TG704 | - | 31 | 44.4 | 3.2 |
| Example 6 | COP | 50 | 0 | 2.1 | 2.1 | Pressure-sensitive adhesive composition A | 10 | Transfer | Applica tion liquid A | Releas e liner A | 0.3 | 38 | 159.2 | 4.8 |
| Example 7 | COP | 50 | 0 | 2.1 | 2.1 | Pressure-sensitive adhesive composition A | 10 | Transfer | Applica tion liquid A | Releas e liner B | 0.1 | 38 | 336.7 | 6.0 |
| Example 8 | COP | 50 | 0 | 2.1 | 2.1 | Pressure-sensitive adhesive composition B | 13 | Transfer | - | TG704 | - | 31 | 44.4 | 3.2 |
| Example 9 | TAC | 60 | 0 | 0.9 | 0.9 | Pressure-sensitive adhesive composition A | 10 | Transfer | - | TG704 | - | 31 | 44.4 | 3.2 |
| Example 10 | (Meth)acr ylic | 40 | 0 | 0.8 | 0.8 | Pressure-sensitive adhesive composition A | 10 | Transfer | - | TG704 | - | 31 | 44.4 | 3.2 |
| Comparative Example 1 | Normal PET | 38 | 3 | 4.6 | 3.6 | Pressure-sensitive adhesive composition A | 10 | Direct transfer | - | TG704 | - | 31 | 44.4 | 3.2 |
| Comparative Example 2 | COP | 50 | 0 | 2.1 | 2.1 | Pressure-sensitive adhesive composition A | 10 | Transfer | Applica tion liquid A | Releas e liner C | 0.1 | 38 | 832.2 | 35.0 |
| Comparative Example 3 | COP | 50 | 0 | 2.1 | 2.1 | Pressure-sensitive adhesive composition B | 13 | Transfer | Applica tion liquid A | Releas e liner C | 0.1 | 38 | 832.2 | 35.0 |

| | | | | | | | | | | | | | | |
|---|---|---|---|---|---|---|---|---|---|---|---|---|---|---|
| *The maximum Feret diameter of defects is described. | | | | | | | | | | | | | | |

**Table 2**

| Example/Com parative Example | Base material | Surface-protective film | | | | | | | | |
|---|---|---|---|---|---|---|---|---|---|---|
| | Number of defects in microscopy [piece(s)/0 .01 mm²] | Haze [%] | Sv [nm] (absol ute value) | Sa [nm] (absolu te value) | Number of defects in microscopy [piece(s)/0.01 mm²] | | Number of foreign matters in automatic inspection [piece(s)/900 mm²] | | Number of air bubbles in automatic inspection [piece(s)/90 0 mm²] | Peel strength with respect to acrylic plate [N/25 mm] |
| | 10 µm or more* | | | | 10 µm or more* | Less than 10 µm* | 10 µm to 29 µm | 30 µm to 100 µm | 10 µm to 100 µm | |
| Example 1 | 0 | 0.1 | 33.7 | 3.0 | 0 | 1 | 1 | 0 | 0 | 0.09 |
| Example 2 | 0 | 0.1 | 28.3 | 3.0 | 0 | 1 | 0 | 0 | 0 | 0.09 |
| Example 3 | 0 | 0.1 | 28.3 | 3.0 | 0 | 1 | 2 | 0 | 0 | 0.09 |
| Example 4 | 1 | 0.3 | 33.7 | 3.0 | 0 | 1 | 27 | 0 | 0 | 0.09 |
| Example 5 | 0 | 0.1 | 33.7 | 3.0 | 0 | 1 | 24 | 0 | 0 | 0.10 |
| Example 6 | 0 | 0.2 | 132.6 | 5.4 | 0 | 1 | 0 | 0 | 2 | 0.10 |
| Example 7 | 0 | 0.3 | 284.7 | 7.6 | 0 | 3 | 1 | 0 | 4 | 0.09 |
| Example 8 | 0 | 0.1 | 33.7 | 3.0 | 0 | 1 | 1 | 0 | 0 | 10.50 |
| Example 9 | 0 | 0.1 | 28.3 | 3.0 | 0 | 1 | 45 | 60 | 0 | 0.09 |
| Example 10 | 0 | 0.1 | 28.3 | 3.0 | 0 | 1 | 10 | 20 | 0 | 0.09 |
| Comparative Example 1 | 3 | 2.4 | 28.3 | 3.0 | 0 | 1 | 30 | 2,270 | 0 | 0.09 |
| Comparative Example 2 | 0 | 0.5 | 533.1 | 26.6 | 3 | 6 | 0 | 0 | 2,000 | 0.08 |
| Comparative Example 3 | 0 | 0.5 | 533.1 | 26.6 | 3 | 6 | 0 | 0 | 2,000 | 10.50 |

| | | | | | | | | | | |
|---|---|---|---|---|---|---|---|---|---|---|
| *The maximum Feret diameter of defects is described. | | | | | | | | | | |

### [Evaluation]

As is apparent from Tables 1 and 2, it is understood that, in the case where the absolute value of the maximum valley depth (Sv) of the surface of the adhesion layer on the opposite side to the base material is 500 nm or less, and the number of defects each having a maximum Feret diameter of 10 um or more in the microscopic observation of the base material is less than 3, even when an object to be protected is subjected to foreign matter inspection and air bubble inspection under a state in which the surface-protective film (base material and adhesion layer) is bonded to the object to be protected, erroneous detection caused by the surface-protective film can be reduced, and the object to be protected can be accurately inspected.

### Industrial Applicability

The surface-protective film of the present invention can be suitably used for surface protection of an optical member and an electronic member.

### Reference Signs List

- **1**: surface-protective film
- **2**: base material
- **3**: adhesion layer
- **4**: release liner

## Claims

1. A surface-protective film, comprising:
a base material; and
an adhesion layer laminated on the base material,
wherein an absolute value of a maximum valley depth (Sv) of a surface of the adhesion layer on an opposite side to the base material is 500 nm or less, and
wherein, when the base material is subjected to microscopic observation, the number of defects each having a maximum Feret diameter of 10 pm or more is less than 3 in an observation region measuring 100 pm by 100 µm.

2. The surface-protective film according to claim 1, wherein an absolute value of an arithmetic average height (Sa) of the surface of the adhesion layer on the opposite side to the base material is 25 nm or less.

3. The surface-protective film according to claim 1 or 2, wherein, when the surface-protective film is subjected to microscopic observation, the number of defects each having a maximum Feret diameter of 10 pm or more is less than 3 in an observation region measuring 100 pm by 100 µm.

4. The surface-protective film according to any one of claims 1 to 3, wherein, when the surface-protective film is subjected to microscopic observation, the number of defects each having a maximum Feret diameter of less than 10 pm is 5 or less in an observation region measuring 100 pm by 100 µm.

5. The surface-protective film according to any one of claims 1 to 4, wherein the base material has a tear strength of 1 N/mm or more.

6. The surface-protective film according to any one of claims 1 to 5, wherein the adhesion layer contains at least one kind of pressure-sensitive adhesive selected from the group consisting of: a (meth)acrylic pressure-sensitive adhesive; a urethane-based pressure-sensitive adhesive; and a silicone-based pressure-sensitive adhesive.

7. An optical member with a surface-protective film, comprising:
an optical member; and
the surface-protective film of any one of claims 1 to 6 bonded to the optical member via the adhesion layer.
